# EUROPÄISCHE PATENTSCHRIFT

(11) **EP 4 051 554 B1**
(45) Veröffentlichungstag und Bekanntmachung des Hinweises auf die Patenterteilung: **22.10.2025**
(21) Anmeldenummer: 20797066.6
(22) Anmeldetag: 21.10.2020
(51) Int. Cl.: B62D 9/00, B60T 8/1755, B60W 10/08, B60W 10/18, B60W 10/20

(54) **VERFAHREN ZUR STEUERUNG EINES KRAFTFAHRZEUGES IM NOTLENKBETRIEB MITTELS VORDERRADBREMSEN-BASIERTEN TORQUE-VECTORING**
METHOD FOR CONTROLLING A MOTOR VEHICLE IN EMERGENCY STEERING MODE BY MEANS OF FRONT WHEEL BRAKE-BASED TORQUE VECTORING
PROCÉDÉ DE COMMANDE D'UN VÉHICULE AUTOMOBILE DANS UN MODE DE DIRECTION D'URGENCE AU MOYEN D'UNE VECTORISATION DE COUPLE REPOSANT SUR UN FREIN DE ROUE AVANT

(30) Priorität: 28.10.2019 DE 102019129032
(43) Veröffentlichungstag der Anmeldung: 07.09.2022
(73) Patentinhaber: thyssenkrupp Presta AG, 9492 Eschen (LI); thyssenkrupp AG, 45143 Essen (DE)
(72) Erfinder: LAPIS, Leonard, 9466 Sennwald (CH); MIANO, Carlo Mario, 9492 Eschen (LI); POLMANS, Kristof, 6464 Tarrenz (AT)
(74) Vertreter: thyssenkrupp Intellectual Property GmbH
(86) Internationale Anmeldenummer: PCT/EP2020/079545
(87) Internationale Veröffentlichungsnummer: WO 2021/083751

(56) Entgegenhaltungen:
- DE-A1- 102012 211 901
- DE-A1- 102013 011 883
- US-A1- 2010 076 650
- US-A1- 2018 273 005

## Beschreibung

Die vorliegende Erfindung betrifft ein Verfahren zur Steuerung eines Steer-by-Wire-Lenksystems für ein Kraftfahrzeug mit den Merkmalen des Oberbegriffs des Anspruchs 1 und ein Kraftfahrzeug, das dazu ausgebildet ist, dieses Verfahren auszuführen.

Bei Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. Der Fahrerlenkwunsch wird von einem Lenkwinkelsensor abgegriffen und in Abhängigkeit des Fahrerlenkwunsches wird über einen Lenksteller die Stellung der gelenkten Räder geregelt. Eine mechanische Verbindung zu den Rädern ist nicht vorgesehen.

Im Normalbetrieb betreibt die Steuerung das Steer-by-Wire-Lenksystem und überprüft permanent die ordnungsgemäße Funktion der Systembestandteile des Lenksystems. Kommt es zu einem Fehler wird die Funktion des Steer-by-Wire-Lenksystem abgeschaltet. Es kann eine mechanische Rückfallebene vorgesehen sein, die einen Notlenkbetrieb ermöglicht. Solche mechanischen Rückfallebenen sind jedoch kostenintensiv.

Ein derartiges Verfahren ist beispielsweise in der DE 10 2013 011883 A1 oder der DE 10 2012 211901 A1 beschrieben. Dabei weist der Notlenkbetrieb jedoch Einschränkungen auf.

Ein Verfahren der eingangs genannten Art ist aus der US 2010/0076650 A1 bekannt. Nachteilig daran ist die Beeinträchtigung des Lenkverhaltens im Notlenkbetrieb.

Es ist Aufgabe der vorliegenden Erfindung, ein Verfahren zur Steuerung eines Steer-by-Wire-Lenksystems für ein Kraftfahrzeuges anzugeben, das ohne mechanische Rückfallebene, einen verbesserten Notlenkbetrieb ermöglicht.

Diese Aufgabe wird von einem Verfahren zur Steuerung eines Steer-by-Wire-Lenksystems mit den Merkmalen des Anspruchs 1 und einem Steer-by-Wire-Lenksystem, das dazu ausgelegt ist, ein solches Verfahren auszuführen, gelöst. Weitere vorteilhafte Ausbildungen der Erfindung sind den Unteransprüchen zu entnehmen.

Demnach ist ein Verfahren zur Steuerung eines Steer-by-Wire-Lenksystems für ein Kraftfahrzeug, welches ein Bremssystem umfasst, in einem Notlenkbetrieb vorgesehen, umfassend die Schritte:
- Überprüfen des Lenksystems auf Vorliegen eines Fehlerzustands,
- Durchführen des Notlenkbetriebs, im Fall, dass ein Fehlerzustand detektiert wurde,
wobei
das Kraftfahrzeug zwei Achsen mit jeweils zwei Rädern umfasst, wobei die vorderen beiden Räder mittels einer Vorderradlenkung lenkbar sind und über eine Lenkstange eines Lenksystems der Vorderradlenkung miteinander verbunden sind, und das Kraftfahrzeug einen einzigen Radantrieb umfasst, der einer der beiden Achsen zugeordnet ist und die beiden Räder der entsprechenden Achse über ein Differential antreibt, wobei der Radantrieb einen einzigen Aktuator umfasst, und wobei im Notlenkbetrieb folgende Schritte ausgeführt werden:
   - Bestimmen einer Sollposition der Lenkstange mittels eines Soll-Radlenkwinkels,
   - Bestimmen eines zu bremsenden Vorderrads und eines Bremsdrucks zum Erreichen der Sollposition mittels einer Steuereinheit,
   - Übermitteln des zu bremsende Vorderrads und des Bremsdrucks an das Bremssystem und Abbremsen des zu bremsenden Vorderrads,
   - Erhöhen eines vom Radantrieb bereitgestellten zusätzlichen Drehmoments zur Kompensation eines durch das Abbremsen des zu bremsenden Vorderrads hervorgerufenen Geschwindigkeitsverlusts des Kraftfahrzeuges,
wobei der Radantrieb ein Vorderradantrieb mit einem offenen Differenzial ist, der im Notlenkbetrieb das ungebremste Vorderrad antreibt und zwar mit der Summe der Drehmomente der beiden Vorderräder und dem zusätzlichen Drehmoment zur Kompensation des Geschwindigkeitsverlusts, bei dem erfindungsgemäß vorgesehen ist,
dass folgender Zusammenhang für eine Rechtskurve gilt:
   T_{FL}+T_{FR}=2*T_{FL}+T_{ped,br}, wobei T_{FL} und T_{FR} das Drehmoment des linken und rechten Vorderrads (FL,FR) sind und T_{ped,br} das in das zu bremsende Vorderrad (FR) eingeleitete Bremsmoment ist.

Durch das Bremsen-basierte Torque Vectoring kann das Kraftfahrzeug auch bei einem Fehlerzustand, insbesondere bei Ausfall des Lenksystems gesteuert werden, ohne das eine mechanische Rückfallebene benötigt wird.

Bei dem Differential handelt es sich um ein regelbares Differential. Es handelt sich insbesondere um ein offenes oder teilweise offenes Differential.

Bevorzugt wird für jedes der Fahrzeugräder ein Soll-Radlenkwinkel bestimmt, der Soll-Radlenkwinkel des linken und des rechten Fahrzeugrads können identisch sein oder unterschiedliche Winkel ausbilden.

Bevorzugt umfasst die Steuereinheit zum Bestimmen des zu bremsenden Vorderrads und des Bremsdrucks eine Software zur Arbitration.

Vorzugsweise fließen zur Bestimmung des zu bremsenden Vorderrads und des Bremsdrucks die Fahrwerkgeometrie, die Eigenschaften des Bremssystems und das Vorzeichen der Soll-Zahnstangenposition in die Software.

Es kann ganz allgemein vorgesehen sein, dass der Soll-Radlenkwinkel mittels eines von einem Fahrer in ein Lenkmittel eingeleiteten Lenkmoments bestimmt wird oder von einem autonomen oder halbautonomen Fahrbetrieb vorgegeben wird.

Weiterhin wird die Aufgabe von einem Kraftfahrzeug gelöst, das dazu eingerichtet ist, das zuvor beschriebene Verfahren durchzuführen. Das Kraftfahrzeug weist bevorzugt einen minimalen Lenkkopfwinkel und einen maximalen Lenkrollhalbmesser auf.

Bevorzugte Ausführungsformen der Erfindung werden nachfolgend anhand der Zeichnung näher erläutert. Gleiche bzw. funktionsgleiche Bauteile sind dabei figurübergreifend mit denselben Bezugszeichen versehen. Es zeigen:
- Figur 1:: eine schematische Darstellung eines Kraftfahrzeugs mit Vorderradantrieb aufweisend einen einzelnen Antriebsmotor,
- Figur 2:: eine schematische Darstellung eines Kraftfahrzeugs mit Vorderradantrieb aufweisend zwei Antriebsmotoren,
- Figur 3:: eine schematische Darstellung eines Kraftfahrzeuges mit Hinterradantrieb aufweisend einen Antriebsmotor und ein Vorderradbremsen-basiertes Torque Vectoring,
- Figur 4:: eine schematische Darstellung eines Kraftfahrzeuges mit Vorderradantrieb aufweisend einen Antriebsmotor und ein Vorderradbremsen-basiertes Torque Vectoring, sowie
- Figur 5:: ein Blockdiagramm einer Steuerung des Kraftfahrzeuges mit Vorderradbremsen-basiertem Torque-Vectoring.

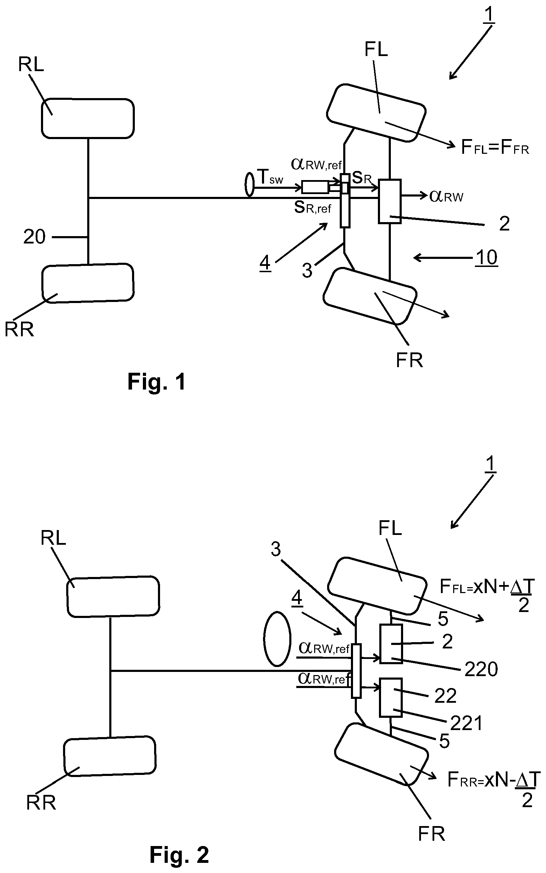

In Figur 1 ist schematisch ein Kraftfahrzeug 1 mit zwei Achsen 10,20 und vier Rädern FL,FR,RL,RR dargestellt, wobei lediglich die Vorderräder FL,FR antreibbar sind (Vorderradantrieb) und der Antrieb 2 der Vorderräder FL,FR auf einer Vorderachse 10 angeordnet ist. Der Antrieb 2 ist ein Elektromotor. Die Vorderachse 10 umfasst bezogen auf eine Fahrtrichtung ein linkes lenkbares Vorderrad FL und ein rechtes lenkbares Vorderrad FR, die über eine Zahnstange 3 eines Zahnstangenlenkgetriebes 4 miteinander verbunden sind. Bei Verlagerung der Zahnstange 3 quer zur Fahrtrichtung nach rechts oder links werden die Räder FL,FR um einen jeweiligen Schwenkpunkt verschwenkt.

Der Fahrer leitet in ein Lenkmittel, insbesondere ein Lenkrad einer Steer-by-Wire-Lenkung ein Lenkmoment T_{SW} ein. Aus diesem Lenkmoment T_{SW} wird ein Soll-Radlenkwinkel der lenkbaren Vorderräder α_{RW,ref} und eine Soll-Zahnstangenposition S_{R,ref} bestimmt. Die Zahnstange 3 wird daraufhin mittels des Zahnstangenlenkgetriebes 4 bewegt, bis sie eine Ist-Zahnstangenposition S_{R} und die Räder einen Radlenkwinkel α_{RW} einnehmen.

Beim Durchfahren einer Rechtskurve, wie in Figur 1 dargestellt, wird das Antriebsmoment mittels des Vorderradantriebs gleichmäßig auf beide Vorderräder FL,FR verteilt, das heißt die Traktionskraft ist für beide Vorderräder gleich, F_{FL}=F_{FR}.

Figur 2 zeigt ebenfalls einen aus dem Stand der Technik bekannten Vorderradantrieb, der zwei separate Aktuatoren 2,22 aufweist. Ein linker Radantriebsmotor 220 ist in Fahrtrichtung links und ein rechter Radantriebsmotor 221 ist in Fahrtrichtung rechts angeordnet. Die Radantriebsmotoren 220,221 sind jeweils über Antriebswellen 5 mit den lenkbaren Vorderrädern FL,FR verbunden. Bei den Radantriebsmotoren 220, 221 handelt es sich um Elektromotoren. Die Vorderräder FL,FR der Vorderradlenkung sind über eine Zahnstange 3 eines Zahnstangenlenkgetriebes 4 miteinander verbunden. Die Steuerung des Zahnstangenlenkgetriebes 4 läuft wie bei dem Steer-by-Wire-Lenksystem der Figur 1 ab, aber die Antriebssteuerung wird derart ausgeführt, dass ein Differenzmoment ΔT zwischen den Vorderrädern FL,FR entsteht, dass proportional zu dem Soll-Radlenkwinkel α_{RW,ref} der lenkbaren Vorderräder FL,FR oder dem Fahrerlenkwunsch ist. Mit anderen Worten, der Soll-Radlenkwinkel α_{RW,ref} der lenkbaren Vorderräder FL,FR fließt in die Steuerung des Vorderradantriebs ein. Beim Fahren einer Rechtskurve, wie in Figur 2 dargestellt, ist die Traktionskraft für das linke Vorderrad xN (beispielsweise 100N)+ ΔT/2 und die Traktionskraft für das rechte Vorderrad xN-ΔT/2. Das Differenzmoment führt zu einer Verlagerung der Zahnstange und somit zu einem Lenkvorgang.

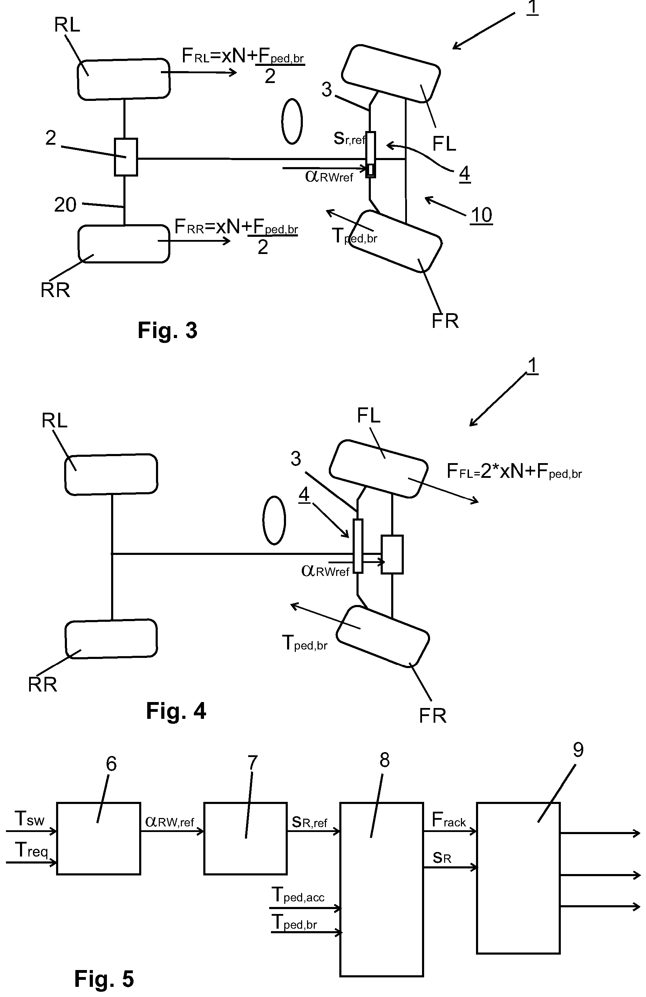

Figur 3 zeigt ein Ausführungsbeispiel der Erfindung. Das Kraftfahrzeug 1 weist eine Vorderradlenkung und einen Hinterradantrieb auf. Die Vorderräder FL,FR der Vorderradlenkung sind über eine Zahnstange 3 eines Zahnstangenlenkgetriebes 4 miteinander verbunden. Der Hinterradantrieb weist einen einzelnen Aktuator 2 auf, insbesondere einen Elektromotor, der die Hinterräder über ein Differenzial antreibt. Für den Fall, dass die Steer-by-Wire-Lenkung ausfällt, das heißt die Vorderradlenkung nicht mehr zur Verfügung steht, geht das Kraftfahrzeug in einen Notlenkbetrieb über. In diesem Notlenkbetrieb wird das Lenkmoment durch ein Abbremsen eines der Vorderräder FL,FR bereitgestellt. In Abhängigkeit von dem Sollradlenkwinkel α_{RW,ref} wird eine Sollzahnstangenposition S_{R,ref} berechnet. Die Zahnstangenposition wird mittels einer Steuerung geregelt, die eine Software zur Arbitration umfasst. In diese Software fließen die Fahrwerkgeometrie, die Eigenschaften des Bremssystems und das Vorzeichen der Sollzahnstangenposition S_{R,ref} ein, um ein zu bremsendes Vorderrad FR,FL und den für den Bremsvorgang benötigten Bremsdruck zu bestimmen. Damit das Kraftfahrzeug 1 durch den Bremsvorgang nicht an Geschwindigkeit verliert, stellt der Hinterradantrieb ein zusätzliches Drehmoment an den Hinterrädern RR,RL bereit, das der Traktionskraft F_{ped,br} entspricht und den Geschwindigkeitsverlust kompensiert. Eine Position eines Gaspedals des Kraftfahrzeuges, vorzugsweise ein Gaspedalwinkel, sowie eine Position eines Bremspedals, vorzugsweise ein Bremspedalwinkel werden an die Steuerung übermittelt, um ein Beschleunigen oder ein Abbremsen des Kraftfahrzeuges zu erkennen, und daraus das zusätzlich benötigte Drehmoment zu berechnen.

Figur 3 zeigt das Fahren einer Rechtskurve. Die Soll-Zahnstangenposition S_{R,ref} und der Sollradlenkwinkel α_{RW,ref} fließen in die Berechnung des vom rechten Vorderrad bereitgestellten Bremsmomentes T_{ped,br} mit ein. Eine Antriebssteuerung des Hinterradantriebs steuert entsprechend das rechte Hinterrad RR und linke Hinterrad RL an, welche jeweils eine Traktionskraft von xN (beispielsweise 100N)+ F_{ped,br}/2 aufbringen, wobei F_{ped,br}, die das Bremsmoment T_{ped,br} kompensierende Kraft ist.

Im Notlenkbetrieb kann das Kraftfahrzeug, trotzdem der Antrieb nur einen einzigen Elektromotor umfasst, mittels Vorderradbremsen-basiertem Torque-Vectoring, ohne Antriebs-basiertem Torque-Vectoring, gelenkt werden. Auf eine zusätzliche mechanische Rückfallebene kann somit verzichtet werden, wodurch Kosten und Gewicht eingespart werden können.

In der Figur 4 ist ein Kraftfahrzeug 1 mit Vorderradantrieb und Vorderradlenkung dargestellt. Die Vorderräder FL,FR der Vorderradlenkung sind über eine Zahnstange 3 eines Zahnstangenlenkgetriebes 4 miteinander verbunden. Der Vorderradantrieb weist einen einzelnen Aktuator 2 auf, insbesondere einen Elektromotor, der die Vorderräder FL,FR über ein offenes Differenzial (ohne Sperreinrichtung) oder ein teilweise offenes Differenzial antreibt. Für den Fall, dass die Lenkung ausfällt, d. h. die Vorderradlenkung nicht mehr zur Verfügung steht, geht das Kraftfahrzeug 1 in einen Notlenkbetrieb über. In diesem Notlenkbetrieb wird das Lenkmoment durch ein Abbremsen eines der Vorderräder FL,FR bereitgestellt. In Abhängigkeit von dem Soll-Radlenkwinkel α_{RW,ref} wird eine Soll-Zahnstangenposition S_{R,ref} berechnet. Die Zahnstangenposition wird mittels einer Steuerung geregelt, die eine Software zur Arbitration umfasst. In diese Software fließen die Fahrwerkgeometrie, die Eigenschaften des Bremssystem und das Vorzeichen der Soll-Zahnstangenposition S_{R,ref} ein, um ein zu bremsendes Vorderrad und den Bremsdruck zu bestimmen. Damit das Kraftfahrzeug 1 durch den Bremsvorgang nicht an Geschwindigkeit verliert, stellt der Aktuator 2 des Vorderradantriebs ein zusätzliches Drehmoment bereit, das den Geschwindigkeitsverlust kompensiert. Eine Position eines Gaspedals des Kraftfahrzeuges, vorzugsweise ein Gaspedalwinkel α, sowie eine Position eines Bremspedals, vorzugsweise ein Bremspedalwinkel werden an die Steuerung übermittelt, um eine Beschleunigung oder ein Abbremsen des Kraftfahrzeuges zu erkennen um das zusätzliche Drehmoment zu berechnen.

Für die in Figur 4 dargestellte Rechtskurve gilt folgender Zusammenhang:
T_{FL}+T_{FR}=2*T_{FL}+T_{ped,br}, wobei T_{FL} und T_{FR} das Drehmoment des linken und rechten Vorderrads sind und T_{ped,br} das in das zu bremsende Vorderrad FR eingeleitete Bremsmoment ist.

Das Bremsen-basierte Torque-Vectoring stellt in diesem Fall einen besonders günstigen und einfachen Notlenkbetrieb dar, der es erlaubt, das Kraftfahrzeug 1 nach Ausfall des Lenksystems zu steuern, ohne das eine mechanische Rückfallebene benötigt wird.

Vorzugsweise haben alle Ausführungsformen gemeinsam, dass ein Lenkkopfwinkel minimal und ein Lenkrollhalbmesser maximal ist, damit ein Lenkvorgang bzw. eine Translation der Zahnstange bereits durch wenig Bremsdruck auf das zu bremsende Vorderrad FL,FR hervorgerufen werden kann.

Ein Lenkvorgang und/oder Notlenkvorgang kann sowohl von einem Fahrer durch Drehen eines Lenkrades oder Bewegen eines sonstigen Lenkmittels als auch durch eine Steuerung eines autonomen oder halbautonomen Kraftfahrzeuges eingeleitet werden.

In der Figur 5 ist ein Blockdiagramm einer Steuerung des Kraftfahrzeuges mit Bremsen-basiertem Torque-Vectoring dargestellt. In einer ersten Einheit 6 werden das in ein Lenkrad vom Fahrer eingeleitete Lenkmoment T_{SW} oder ein von einem autonomen Fahrbetrieb angefragte Soll-Drehmoment T_{reg} in einen Soll-Radlenkwinkel α_{RW,ref} der lenkbaren Vorderräder FL,FR umgerechnet. Eine zweite Einheit 7 bestimmt aus dem Soll-Radlenkwinkel α_{RW,ref} eine Soll-Zahnstangenposition S_{R,ref}. Aus der Soll-Zahnstangenposition S_{R,ref} und dem Brems-Drehmoment T_{ped,br} sowie dem Beschleunigungs-Drehmoment T_{ped,acc} der angetriebenen Räder werden in einer dritten Einheit 8 die Ist-Zahnstangenposition S_{R} sowie die Zahnstangenkraft F_{Rack} bestimmt. In einer vierten Einheit 9 wird daraus dann bestimmt, wie sich das Kraftfahrzeug und die Fahrzeugräder im Falle einer konstanten Geschwindigkeit und Kurvenfahrt, einer Beschleunigung und Kurvenfahrt sowie während eines Bremsvorgangs in einer Kurvenfahrt verhält und anschließend für den jeweiligen Fahrzeugzustand implementiert.

Im ersten Zustand fährt das Kraftfahrzeug mit einer konstanten Geschwindigkeit v und entlang einer Kurve oder Kurvenbahn. Während der Kurvenfahrt muss die Soll-Zahnstangenposition S_{R,ref} infolge eines eingeschlagenen Lenkrads oder über die eingeschlagenen vorderen Fahrzeugräder einen Wert annehmen, der ungleich Null ist, da sich die Zahnstangenposition dabei verändert oder verändern muss. Die Bremskraft der jeweiligen vorderen Fahrzeugräder entspricht der Funktion der Soll-Zahnstangenposition F_{FL},F_{FR}. = f(S_{R,ref}). Für die hinteren Fahrzeugräder bedeutet es in diesem Fall, dass das Traktionsmoment der hinteren Fahrzeugräder T_{FL,}T_{FR} eine Funktion aus der Soll-Zahnstangenposition S_{R,ref} und dem Beschleunigungs-Moment T_{ped, acc} (T_{FL,}T_{FR}. = f(S_{R,ref}, T_{ped,} acc)) ist, um die Fahrzeuggeschwindigkeit zu halten.

Im zweiten Zustand, also im Falle einer tangentialen Fahrzeugbeschleunigung v>0 und während einer Kurvenfahrt S_{R,ref} ≠0 entsprechen die Zusammenhänge bezogen auf die Bremskraft und das Traktionsmoment dem 1. Zustand: F_{FL,}F_{FR}. = f(S_{R,ref}) und T_{ped, acc} (T_{FL,}T_{FR}. = f(S_{R,ref}, T_{ped, acc})).

Im dritten Zustand, welcher einem Bremsvorgang entspricht, also wenn die Fahrzeuggeschwindigkeit reduziert wird (v<0) sowie eine Kurvenfahrt bzw. Kurvenbahn S_{R,ref} ≠0 gefahren wird, ist die Bremskraft der vorderen Fahrzeugräder entsprechend einer Funktion der Soll-Zahnstangenposition und dem Brems-Moment T_{ped,br} ( F_{FL,}F_{FR}. = f(S_{R,ref} ; T_{ped,br})). Das Traktionsmoment an den hinteren Fahrzeugrädern liegt nicht an und ist damit Null (T_{FL,}T_{FR}.=0).

## Patentansprüche

1. Verfahren zur Steuerung eines Steer-by-Wire-Lenksystems für ein Kraftfahrzeug (1), welches ein Bremssystem umfasst, in einem Notlenkbetrieb, umfassend die Schritte:
• Überprüfen des Lenksystems auf Vorliegen eines Fehlerzustandes,
• Durchführen des Notlenkbetriebs, im Fall, dass ein Fehlerzustand detektiert wurde,
wobei
das Kraftfahrzeug (1) zwei Achsen (10,20) mit jeweils zwei Rädern (RL,RR,FL,FR) umfasst, wobei die vorderen beiden Räder (FL,FR) mittels einer Vorderradlenkung lenkbar sind und über eine Lenkstange (3) eines Lenksystems (4) der Vorderradlenkung miteinander verbunden sind, und das Kraftfahrzeug (1) einen einzigen Radantrieb umfasst, der einer der beiden Achsen (10,20) zugeordnet ist und die beiden Räder der entsprechenden Achse über ein Differential antreibt, wobei der Radantrieb einen einzigen Aktuator (2) umfasst, und wobei im Notlenkbetrieb folgende Schritte ausgeführt werden:
• Bestimmen einer Sollposition der Lenkstange (S_{R,ref}) mittels eines Soll-Radlenkwinkels (α_{RW,ref}),
• Bestimmen eines zu bremsenden Vorderrads (FL,FR) und eines Bremsdrucks zum Erreichen der Sollposition (S_{R,ref}) mittels einer Steuereinheit,
• Übermitteln des zu bremsenden Vorderrads (FL,FR) und des Bremsdrucks an das Bremssystem und Abbremsen des zu bremsenden Vorderrads (FL,FR),
• Erhöhen eines vom Radantrieb bereitgestellten zusätzlichen Drehmoments zur Kompensation eines durch das Abbremsen des zu bremsenden Vorderrads (FL,FR) hervorgerufenen Geschwindigkeitsverlusts des Kraftfahrzeuges (1),
wobei der Radantrieb ein Vorderradantrieb mit einem offenen Differenzial ist, der im Notlenkbetrieb das ungebremste Vorderrad antreibt und zwar mit der Summe der Drehmomente der beiden Vorderräder und dem zusätzlichen Drehmoment zur Kompensation des Geschwindigkeitsverlusts,
**dadurch gekennzeichnet,**
**dass** folgender Zusammenhang für eine Rechtskurve gilt:
T_{FL}+T_{FR}=2*T_{FL}+T_{ped,br}, wobei T_{FL} und T_{FR} das Drehmoment des linken und rechten Vorderrads (FL,FR) sind und T_{ped,br} das in das zu bremsende Vorderrad (FR) eingeleitete Bremsmoment ist.

2. Verfahren nach Anspruch 1, **dadurch gekennzeichnet, dass** die Steuereinheit zum Bestimmen des zu bremsenden Vorderrads (FL,FR) und des Bremsdrucks eine Software zur Arbitration umfasst.

3. Verfahren nach Anspruch 2, **dadurch gekennzeichnet, dass** zur Bestimmung des zu bremsenden Vorderrads (FL, FR) und des Bremsdrucks die Fahrwerkgeometrie, die Eigenschaften des Bremssystems und das Vorzeichen der Sollzahnstangenposition (S_{R,ref}) in die Berechnung einbezogen werden.

4. Verfahren nach einem der vorhergehenden Ansprüche, **dadurch gekennzeichnet, dass** der Radantrieb ein Hinterradantrieb ist, der im Notlenkbetrieb für beide Hinterräder (RR,RL) dasselbe zusätzliche Drehmoment bereitstellt, so dass die Summe der beiden zusätzlichen Drehmomente den Geschwindigkeitsverlust kompensiert.

5. Verfahren nach einem der vorhergehenden Ansprüche, **dadurch gekennzeichnet, dass** der Soll-Radlenkwinkel (α_{RW,ref}) mittels eines von einem Fahrer in ein Lenkmittel eingeleiteten Lenkmoments (T_{SW}) bestimmt wird.

6. Verfahren nach einem der vorhergehenden Ansprüche 1 bis 5, **dadurch gekennzeichnet, dass** der Soll-Radlenkwinkel (α_{RW,ref}) von einem autonomen oder halbautonomen Fahrbetrieb vorgegeben wird.

7. Kraftfahrzeug, das dazu eingerichtet ist, das Verfahren nach einem der Ansprüche 1 bis 6 durchzuführen.

8. Kraftfahrzeug nach Anspruch 7, **dadurch gekennzeichnet, dass** der Lenkkopfwinkel minimal und der Lenkrollhalbmesser maximal ist.

## Claims

1. A method of controlling a steer-by-wire steering system for a motor vehicle (1) comprising a brake system in an emergency steering mode, comprising the steps of:
• Checking the steering system for the presence of a fault condition,
• carrying out the emergency steering mode in the event that a fault condition has been detected,
wherein
the motor vehicle (1) comprises two axles (10, 20) each with two wheels (RL, RR, FL, FR), wherein the front two wheels (FL, FR) can be steered by means of a front-wheel steering system and are connected to one another via a steering rod (3) of a steering system (4) of the front-wheel steering system, and the motor vehicle (1) comprises a single wheel drive which is assigned to one of the two axles (10, 20) and drives the two wheels of the corresponding axle via a differential, wherein the wheel drive comprises a single actuator (2), and wherein the following steps are carried out in emergency steering mode:
• Determining a target position of the steering rod (S_{R,ref}) by means of a target wheel steering angle (α_{RW,ref}),
• determining a front wheel (FL,FR) to be braked and a brake pressure for reaching the target position (S_{R,ref}) by means of a control unit,
• transmitting the front wheel (FL,FR) to be braked and the brake pressure to the brake system and braking the front wheel (FL,FR) to be braked,
• increasing an additional torque provided by the wheel drive to compensate for a loss of speed of the motor vehicle (1) caused by the braking of the front wheel (FL,FR) to be braked,
wherein the wheel drive is a front wheel drive with an open differential, which drives the unbraked front wheel in emergency steering mode with the sum of the torques of the two front wheels and the additional torque for compensating the loss of speed,
**characterized in**
**that** the following relationship applies for a right-hand bend:
T_{FL}+T_{FR}=2*T_{FL}+T_{ped,br}, where T_{FL} and T_{FR} are the torque of the left and right front wheels (FL,FR) and T_{ped,br} is the braking torque introduced into the front wheel (FR) to be braked.

2. The method according to claim 1, **characterized in that** the control unit comprises arbitration software for determining the front wheel (FL,FR) to be braked and the brake pressure.

3. Method according to claim 2, **characterized in that** the chassis geometry, the characteristics of the brake system and the sign of the nominal rack position (S_{R,ref}) are included in the calculation to determine the front wheel (FL, FR) to be braked and the brake pressure.

4. Method according to one of the preceding claims, **characterized in that** the wheel drive is a rear-wheel drive which provides the same additional torque for both rear wheels (RR, RL) in emergency steering mode, so that the sum of the two additional torques compensates for the loss of speed.

5. Method according to one of the preceding claims, **characterized in that** the desired wheel steering angle (α_{RW,ref}) is determined by means of a steering torque (T_{SW}) introduced into a steering means by a driver.

6. Method according to one of the preceding claims 1 to 5, **characterized in that** the target wheel steering angle (α_{RW,ref}) is predetermined by a autonomous or semi-autonomous driving mode.

7. A motor vehicle adapted to perform the method according to any one of claims 1 to 6.

8. Motor vehicle according to claim 7, **characterized in that** the steering head angle is minimum and the steering roll radius is maximum.

## Revendications

1. Procédé de commande d'un système de direction Steer-by-Wire pour un véhicule automobile (1), qui comprend un système de freinage, dans un mode de direction d'urgence, comprenant les étapes suivantes :
• Vérification de la présence d'un état de défaut du système de direction,
• Exécution du mode de direction d'urgence, dans le cas où une condition de défaut a été détectée,
dans lequel
le véhicule automobile (1) comprend deux essieux (10, 20) avec chacun deux roues (RL, RR, FL, FR), les deux roues avant (FL, FR) pouvant être dirigées au moyen d'une direction des roues avant et étant reliées entre elles par une barre de direction (3) d'un système de direction (4) de la direction des roues avant, et le véhicule automobile (1) comprend un seul entraînement de roue qui est associé à l'un des deux essieux (10, 20) et qui entraîne les deux roues de l'essieu correspondant par l'intermédiaire d'un différentiel, l'entraînement de roue comprenant un seul actionneur (2), et les étapes suivantes étant exécutées en mode de direction de secours :
• Détermination d'une position de consigne du guidon (S_{R,ref}) au moyen d'un angle de braquage de consigne des roues (α_{RW,ref}),
• Détermination d'une roue avant à freiner (FL, FR) et d'une pression de freinage pour atteindre la position de consigne (S_{R,ref}) au moyen d'une unité de commande,
• transmettre la roue avant (FL, FR) à freiner et la pression de freinage au système de freinage et freiner la roue avant (FL, FR) à freiner,
• Augmenter un couple supplémentaire fourni par l'entraînement de roue pour compenser une perte de vitesse du véhicule automobile (1) provoquée par le freinage de la roue avant (FL, FR) à freiner,
l'entraînement des roues étant un entraînement des roues avant avec un différentiel ouvert qui entraîne la roue avant non freinée en mode de direction d'urgence, et ce avec la somme des couples des deux roues avant et du couple supplémentaire pour compenser la perte de vitesse,
**caractérisé en ce que**
**en ce que** la relation suivante s'applique pour un virage à droite :
T_{FL}+T_{FR}=2*T_{FL}+T_{ped,br}, où T_{FL} et T_{FR} sont les couples des roues avant gauche et droite (FL,FR) et T_{ped,br} est le couple de freinage introduit dans la roue avant (FR) à freiner.

2. Procédé selon la revendication 1, **caractérisé en ce que** l'unité de commande comprend un logiciel d'arbitrage pour déterminer la roue avant (FL, FR) à freiner et la pression de freinage.

3. Procédé selon la revendication 2, **caractérisé en ce que**, pour déterminer la roue avant à freiner (FL, FR) et la pression de freinage, la géométrie du châssis, les caractéristiques du système de freinage et le signe de la position de consigne de la crémaillère (S_{R,ref}) sont pris en compte dans le calcul.

4. Procédé selon l'une des revendications précédentes, **caractérisé en ce que** l'entraînement des roues est un entraînement des roues arrière qui, en mode de direction d'urgence, fournit le même couple supplémentaire pour les deux roues arrière (RR, RL), de sorte que la somme des deux couples supplémentaires compense la perte de vitesse.

5. Procédé selon l'une des revendications précédentes, **caractérisé en ce que** l'angle de braquage de consigne des roues (α_{RW,ref}) est déterminé au moyen d'un couple de braquage (T_{SW}) appliqué par un conducteur à un moyen de direction.

6. Procédé selon l'une des revendications précédentes 1 à 5, **caractérisé en ce que** l'angle de braquage des roues de consigne (α_{RW,ref}) est imposé par un mode de conduite autonome ou semi-autonome .

7. Véhicule automobile adapté pour mettre en œuvre le procédé selon l'une des revendications 1 à 6.

8. Véhicule automobile selon la revendication 7, **caractérisé en ce que** l'angle de tête de direction est minimal et le rayon de roulis de direction est maximal.
